(19) **Europäisches Patentamt / European Patent Office / Office européen des brevets**

(11) **EP 4 575 572 A1**

(12) # EUROPEAN PATENT APPLICATION

(43) Date of publication:
25.06.2025 Bulletin 2025/26

(21) Application number: 24215558.8

(22) Date of filing: 26.11.2024

(51) International Patent Classification (IPC):
G01S 13/42 (2006.01)  G01S 13/58 (2006.01)
G01S 13/60 (2006.01)  G01S 13/91 (2006.01)
G01S 13/92 (2006.01)  G01S 13/935 (2020.01)
G01S 13/88 (2006.01)  G01S 13/02 (2006.01)

(52) Cooperative Patent Classification (CPC):
G01S 13/426; G01S 13/589; G01S 13/60;
G01S 13/913; G01S 13/92; G01S 13/935;
G01S 13/882; G01S 2013/0245

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 21.12.2023  US 202318392868

(71) Applicant: Honeywell International Inc.
Charlotte, NC 28202 (US)

(72) Inventors:
• BEDA, Tomas
  Charlotte, 28202 (US)
• KEJIK, Petr
  Charlotte, 28202 (US)
• DOBES, Michal
  Charlotte, 28202 (US)
• LUKAS, Jan
  Charlotte, 28202 (US)

(74) Representative: Haseltine Lake Kempner LLP
Cheapside House
138 Cheapside
London EC2V 6BJ (GB)

(54) **SMART AND ADAPTIVE RADAR CONFIGURATION FOR DOPPLER VELOCITY ESTIMATION**

(57)    A systems of sensors used for navigation in which the system performs real-time dynamic adjustments of the sensor configuration including scan pattern and sensor output characteristics. For an airborne radar system, the radar system may adjust the scan pattern and/or adjust the waveform characteristics based on the phase of flight. Radar waveform characteristics may include frequency, chirp length, modulation type, dwell duration and other characteristics. The scan pattern and radar beam direction may be based on any combination of the transmit beam, or transmit beams, as well as adjustments to receive beams, e.g., by digital beam forming done by signal processing circuitry of the radar system. Similar techniques may also be applied to other sensors or combinations of sensors such as sonar, lidar, visual, infrared, and other sensors.

FIG. 3A

EP 4 575 572 A1

FIG. 3B

FIG. 3C

**Description**

**TECHNICAL FIELD**

The disclosure relates to vehicle velocity estimation, and more specifically adjusting characteristics of sensor beams that measure data used for the velocity estimate.

**BACKGROUND**

Navigation and ownship vehicle velocity determination/estimation for airborne vehicles may include using tools such as global navigation satellite systems (GNSS) such as the Global Positioning System (GPS), Galileo, GLONASS and similar systems. A GNSS includes a constellation of satellites providing signals from space that transmit positioning and timing information to receivers on board vehicles. The receivers use the received information to determine, for example, an ownship three-dimensional (3D) location and velocity. Other navigation and techniques may include using sensors such as radar, lidar, laser, sonar, and similar sensors to measure distance from terrain, including bodies of water, and use the measurements to determine ownship location and velocity.

**SUMMARY**

In general, the disclosure describes systems of sensors used for navigation in which the system performs real-time dynamic adjustments of the sensor configuration including scan pattern and sensor output characteristics. In the example of an airborne radar system of this disclosure, the radar system may adjust the scan pattern, e.g., the direction of the radar beams, as well as adjust the waveform characteristics based on the phase of flight. Radar waveform characteristics may include frequency, chirp length, modulation type, dwell duration and other characteristics. In this disclosure, radar waveform "characteristics" may also be referred to as radar waveform "parameters." The scan pattern and radar beam direction may be based on a combination of the transmit beam, or transmit beams, as well as adjustments of receive beams, e.g., by digital beam forming done by signal processing circuitry of the radar system. Similar techniques may also be applied to other sensors or combinations of sensors such as sonar, lidar, visual, infrared, and other sensors. Phase of flight may include take-off, landing, approach to landing, climb, descent, normal cruise, evasive maneuvers, and other similar phases of flight.

In one example, the disclosure describes a system configured to be installed in an airborne vehicle, the system comprising: radar transmitter circuitry configured to output radar signals via at least one transmit antenna; radar receiver circuitry configured to receive reflected radar signals via at least one receive antenna; processing circuitry configured to: determine a velocity of the airborne vehicle based on reflected radar signals of at least three radar beams, wherein each radar beam has a beamwidth and a pointing direction defined at least in part by a first angle and a second angle relative to the airborne vehicle; determine a performance target for the velocity estimation of the airborne vehicle; adjust the first angle and the second angle for each radar beam based on a plurality of factors, the factors comprising one or more of: the performance target, the velocity and attitude of the airborne vehicle and a height above terrain of the airborne vehicle.

In another example, the disclosure describes a method comprising: transmitting radar signals via at least one transmit antenna by radar transmitter circuitry of a radar system, wherein the radar system is configured to be installed in an airborne vehicle; receiving reflected radar signals via at least one receive antenna by radar receiver circuitry of the radar system; determining, by processing circuitry of the radar system, a velocity of the airborne vehicle based on reflected radar signals of at least three radar beams, wherein each radar beam has a pointing direction defined at least in part by a first angle and a second angle relative to the airborne vehicle; determining, by the processing circuitry, a performance target for the velocity estimation of the airborne vehicle; adjusting, by the processing circuitry, the first angle and the second angle for each radar beam based on a plurality of factors, the factors comprising one or more of: the performance target, the velocity and attitude of the airborne vehicle and a height above terrain of the airborne vehicle.

In another example, the disclosure describes a non-transitory computer-readable storage medium comprising instructions that, when executed, cause processing circuitry of a computing device to: control radar transmitter circuitry of a radar system to transmit radar signals via at least one transmit antenna, wherein the radar system is configured to be installed in an airborne vehicle; control radar receiver circuitry of the radar system to receive reflected radar signals via at least one receive antenna; determine a velocity of the airborne vehicle based on reflected radar signals of at least three radar beams, wherein each radar beam has a pointing direction defined at least in part by a first angle and a second angle relative to the airborne vehicle; determine a performance target for the velocity estimation of the airborne vehicle; adjust the first angle and the second angle for each radar beam based on a plurality of factors, the factors comprising one or more of: the performance target, the velocity and attitude of the airborne vehicle and a height above terrain of the airborne vehicle.

The details of one or more examples of the disclosure are set forth in the accompanying drawings and the description below. Other features, objects, and advantages of the disclosure will be apparent from the description and drawings, and from the claims.

BRIEF DESCRIPTION OF DRAWINGS

FIGS. 1A, 1B, 1C and 1D are conceptual diagrams illustrating examples of the sensor scanning patterns according to one or more techniques of this disclosure.

FIG. 1E is a conceptual diagram illustrating an example of a single transmit beam with a plurality of receive beams.

FIG. 2 is a block diagram illustrating an example radar system configured to dynamically adjust the radar configuration based on the operational scenario, according to one or more techniques of this disclosure.

FIGS. 3A, 3B, 3C are conceptual drawings illustrating an example of dynamically adjusting the scan pattern of the radar beams according to one or more techniques of this disclosure.

FIGS. 3D, 3E, and 3F are conceptual drawings illustrating an example of dynamically adjusting the scan pattern of the radar beams according to one or more techniques of this disclosure.

FIG. 4 is a flow chart illustrating an example operation of the radar system executing dynamic scan pattern adjustment according to one or more techniques of this disclosure.

FIGS. 5A and 5B are conceptual drawings illustrating different operational scenarios resulting in dynamic changes to the waveform configuration for the system of this disclosure.

FIG. 6 is a flow chart illustrating an example operation of the radar system executing dynamic waveform configuration adjustment according to one or more techniques of this disclosure.

FIG. 7 is a graph illustrating a relationship between ownship vertical velocity and maximum scan angle.

FIG. 8 is a graph illustrating a relationship between chirp duration, maximum range, and maximum unambiguous velocity.

FIGS. 9A, 9B, and 9C are conceptual diagrams illustrating examples of simultaneous and sequential scanning.

FIG. 10 is a flow chart illustrating an example mode of operation for the system of this disclosure.

DETAILED DESCRIPTION

The disclosure describes techniques for operating sensor systems on a vehicle by dynamically adjusting the sensor configuration based on the operational scenario of the vehicle. The one or more sensors, including a radar system, in addition to performing other functions, may perform navigation functions, such as calculating a velocity measurement in three-dimensional (3D) space for the vehicle. The systems of this disclosure may calculate the vehicle velocity based on measurements of the Doppler frequency shift. The Doppler frequency shift is induced by the changes of the relative distance between the vehicle and the terrain in the vicinity of the vehicle. In the example of an airborne vehicle, the system of this disclosure may dynamically adjust the sensor configuration, such as scan pattern as well as adjust the waveform characteristics based on the operational scenario. For an airborne vehicle, e.g., a manned or unmanned aircraft, the operational scenario may include the phase of flight, the altitude above the ground, capabilities of the sensors, e.g., the radar system, the type of terrain in the vicinity, the availability of other navigation systems, and other factors. For example, operational scenario may include a location of the airborne vehicle relative to terrain, which may include altitude, but also proximity to walls of a canyon or valley, where the "canyon or valley" may be between walls of natural terrain, e.g., mountainous terrain, or between buildings in an urban setting. The system of this disclosure may be useful in operational scenarios such as low visibility, a prolonged outage of a global navigation satellite system (GNSS) such as the Global Positioning System (GPS), GLONASS, and Galileo, as well as in the example of an unmanned aircraft, operations beyond the visual line of sight (BVLOS).

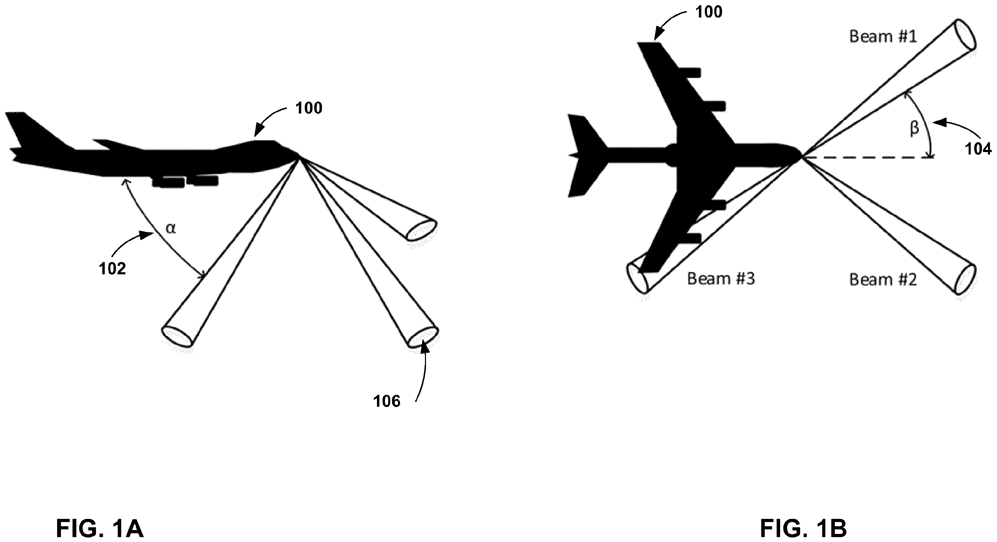

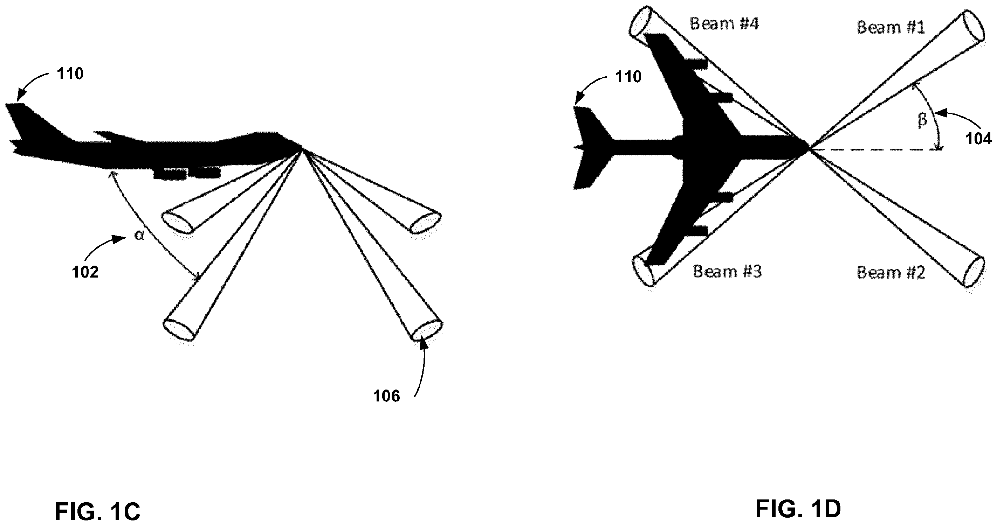

FIGS. 1A, 1B, 1C and 1D are conceptual diagrams illustrating examples of the sensor scanning patterns according to one or more techniques of this disclosure. The example system illustrated in FIGS. 1A - 1D is configured to be installed in an airborne vehicle, which may be manned or unmanned. In other examples, the system of this disclosure may also be installed in other vehicles including land vehicles and watercraft (not shown in FIGS. 1A - 1D). To simplify the description, this disclosure will focus on aircraft based systems, but the techniques may be equally applicable to these other vehicles. Similarly, this disclosure will focus on radar systems as sensors to simplify the description. However, in other examples, the techniques of this disclosure may be applied to other sensors, including light detection, and ranging (LIDAR), infra-red based systems, laser, sonar, and other similar systems.

In some examples, the system may include radar transmitter circuitry configured to output radar signals via at least one transmit antenna and radar receiver circuitry configured to receive reflected radar signals via at least one receive antenna. In the example of FIGS. 1A and 1B, the system is configured to measure velocity of aircraft 100, using three radar beams (three pairs of transmit and receive beams). In the example of FIGS. 1C and 1D, the system on board aircraft 110 uses four radar beams.

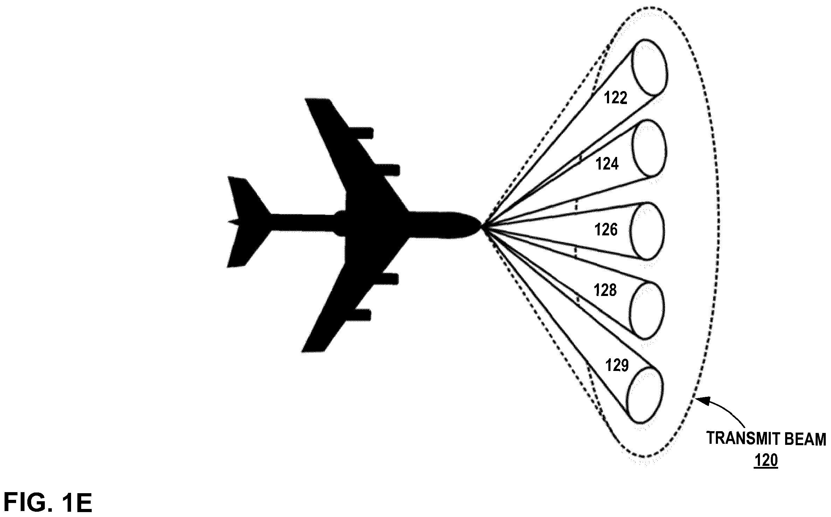

In some examples, the radar beams may be configured in a different way than using pairs of beams. FIG. 1E is a conceptual diagram illustrating an example of a single transmit beam with a plurality of receive beams. In some examples, a vehicle may include radar systems with two or more transmitter-receiver units, each one using narrow receive beams 122, 124, 126, 128 and/or 129, and one wide transmit beam 120 (illuminating the area to which the receive beams are directed). In some examples the transmit beams, receive beams, or both transmit and receive beams are formed digitally, e.g., using digital beam forming circuitry of the signal processing circuitry for the system of this disclosure.

In the example of FIGS. 1C and 1D, for example, a first transmitter-receiver unit may use receive beams #1 and #2, shown in FIG. 1D, and one transmit beam (not depicted in FIG. 1C and 1D), illuminating the wide plane/area to which both beams #1 and #2 are directed. A second transmitter-receiver unit may use receive beams #3 and #4, shown in FIG. 1D and one transmit beam (not depicted in FIG. 1C and 1D), illuminating the wide plane/area to which both beams #3 and #4 are directed.

The radar systems of FIGS. 1A - 1D may include processing circuitry configured to determine a velocity of the airborne vehicle, e.g., aircraft 100, based on reflected radar signals of at least three radar beams. Radar system configuration to determine the velocity of aircraft 100, or 110, may depend on any one or more of several different tradeoffs. For example, increasing the maximum radar range might decrease the maximum velocity which might be measured unambiguously. In other words, changing the radar system configuration to increase the range may also result in the maximum ownship velocity that the radar system is able to unambiguously measure being reduced for that configuration. In another example, a configuration that increases the velocity resolution might also increase the overall scan time, which may result in decreasing the update rate of radar system outputs. The system of this disclosure may optimize the radar configuration to obtain optimized performance, where "optimized" may depend on the aircraft mission and operational scenario. In some examples, the system of this disclosure may determine the optimal radar system configuration based on the operational scenario and the performance characteristics for the radar system. The processing circuitry for the radar system of this disclosure may dynamically, in real-time, adjust at least one of the scan pattern geometry or the waveform configuration.

In the example of FIGS. 1A - 1D, the processing circuitry may adjust the scan pattern for the radar system by adjusting the beam angle relative to the aircraft, e.g., aircraft 100. As shown in FIGS. 1A - 1D, each radar beam has a beam width 106 (defined by the radar antenna) and pointing direction, defined at least in part by a first angle and a second angle relative to the airborne vehicle. In the example of FIGS. 1A-1D, the first angle is $\alpha$ 102 and the second angle is $\beta$ 104.

The processing circuitry of the radar system may execute programming instructions that cause the processing circuitry to determine a performance target for the velocity estimation of the airborne vehicle. The operational scenario may impact the performance target. In some examples, the aircraft is in normal cruise, well above terrain, and therefore the performance target may be less stringent than in other operational scenarios, especially if a GNSS is available. In other words, the status of other navigation systems, e.g., GNSS, inertial navigation systems (INS), and other navigation systems may impact the operational scenario. In other examples, e.g., other phases of flight, especially during the approach and landing, the performance target may be more stringent. In other words, the processing circuitry may configure the radar to prioritize velocity accuracy, as well as rapid velocity calculation updates during approach and landing, when compared to cruise flight. In some examples, the ability to effectively determine a performance target for velocity estimation during all phases of flight may be desirable for urban air mobility (UAM) vehicles. The flight profile for UAM vehicles may be characterized by variable flight dynamics throughout the flight. For example, the landing phase of UAM vehicle may be very slow, compared to cruise flight, and may have hazards to navigation, such as towers, buildings, and power lines. Accordingly, for certain operational scenarios, UAM vehicles, as well as other vehicles, may benefit from high accuracy in terms of vehicle position estimation and velocity estimation.

Based on the determined performance target for vehicle velocity estimation, the processing circuitry may adjust the scan pattern, e.g., adjust $\alpha$ 102 and $\beta$ 104 for each beam. In some examples in addition to the performance target, programming instructions for the processing circuitry may cause the processing circuitry to also adjust the radar configuration, including the scan pattern, based a variety of other factors, which may include velocity and attitude of the airborne vehicle and a height above terrain of the airborne vehicle.

As noted above, the processing circuitry for the radar system may perform real-time adjustment of radar configuration, including both scan pattern and/or waveform configuration, to achieve the best performance which might be otherwise degraded due to radar related limits. In some examples, adjusting the waveform configuration may include adjustments of the radar waveform and adjustments to signal processing for unambiguous velocity estimation. The unambiguous velocity (or maximum unambiguous velocity, $V_{max}$) is the maximum velocity (total vector sum of radar and target velocities) that could be measured by the radar without ambiguity (e.g., cannot be mistaken as a velocity multiple). Some examples of waveform configuration may include output signal characteristics such as frequency, power, chirp characteristics, dwell duration, modulation frequency, type of modulation, e.g., sawtooth, triangle or other modulation types. In some examples, a shorter chirp duration may be used at lower altitudes to decrease scan time or to increase number of chirps, which may increase the velocity accuracy $\Delta V$ in the direction of the radar beam. In some examples, waveform configuration may also affect the beam width 106, number and size of sidelobes, and other beam characteristics.

In some examples, data received by one or two radar beams may be used to determine projections of the velocity vector into each beam direction. While this information alone may not be enough to estimate the full 3D velocity vector, it might still be used, to estimate certain components of the velocity vector of the airborne vehicle either with or without additional data from other onboard sensor or sensors (e.g., inertial measurement unit, radar altimeter, etc.). In other examples, one or two projections of the velocity vector into beam directions may be used to estimate the full 3D velocity vector while using additional information. The examples of such additional information may include information from additional onboard sensors or information about vehicle motion and beam measurements in time.

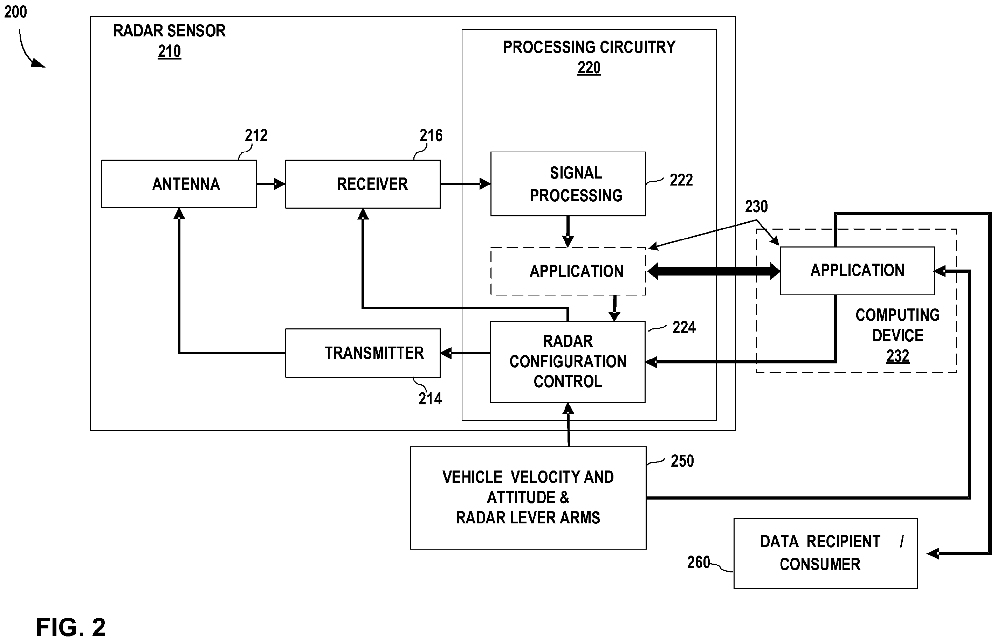

FIG. 2 is a block diagram illustrating an example radar system configured to dynamically adjust the radar configuration based on the operational scenario, according to one or more techniques of this disclosure. In the example of FIG. 2, system 200 includes a radar sensor 210 onboard a vehicle such as an aircraft (e.g., helicopter, unmanned aerial vehicle (UAV), UAM vehicle, manned fixed wing aircraft and similar vehicles). Radar sensor 210 includes at least one antenna 212, transmitter 214 operatively coupled to antenna 212, and receiver 216, also operatively coupled to antenna 212. In some examples, system 200 may include a separate transmitter antenna and receiver antenna (not shown in FIG. 2). In other examples, the same antenna may both transmit and receive the radar signals.

Radar sensor 210 is just one example of a sensor that may apply the techniques of this disclosure. As described above in relation to FIGS. 1A - 1D, other sensors, such as LIDAR or infra-red systems may also apply the techniques of this disclosure. The description of this disclosure may focus on Doppler velocity estimation using radar sensor 210 with electronically steered antenna beam(s). For electronically steered radar beams, antenna 212 may be implemented for transmitting and receiving, as an antenna array, e.g., a phased array antenna. In other examples, the beam-steering capability may be implemented using electronically steered antenna array(s), mechanically steered antenna(s), or a combination of both. The beam-steering capability can be implemented for transmitter (transmitting antenna), receiver (receiving antenna), e.g., antenna receive aperture, or both. Antenna steering (beam control) can include specification of individual beam direction(s), specification of a desired field of view (FOV), or a combination of both, e.g., an adjustment to the beam angle relative to the vehicle, as described above in relation to FIGS. 1A - 1D.

Radar sensor 210 also includes processing circuitry 220, configured to execute radar signal processing, data processing and radar control. Processing circuitry 220 may host radar signal processing unit 222 and radar configuration controller 224. In some examples, radar signal processing unit 222 and radar configuration controller 224 may be implemented as programming instructions stored at a memory operatively coupled to processing circuitry 220. In other examples, radar signal processing unit 222 and radar configuration controller 224 may each be executed by separate processing circuitry under the control of processing circuitry 220. In other examples, processing circuitry 220 may be distributed among two or more computing devices associated with the vehicle and executing the functions described herein may be distributed to the processing circuitry of the two or more computing devices. For example, a UAV may include computing devices on board the vehicle, as well as computing devices located at ground stations associated with the vehicle.

Examples of processing circuitry in system 200, e.g., processing circuitry 220 may include any one or more of a microcontroller (MCU), e.g. a computer on a single integrated circuit containing a processor core, memory, and programmable input/output peripherals, a microprocessor ($\mu$P), e.g. a central processing unit (CPU) on a single integrated circuit (IC), a controller, a digital signal processor (DSP), an application specific integrated circuit (ASIC), a field-programmable gate array (FPGA), a system on chip (SoC) or equivalent discrete or integrated logic circuitry. A processor may be integrated circuitry, i.e., integrated processing circuitry, and that the integrated processing circuitry may be realized as fixed hardware processing circuitry, programmable processing circuitry and/or a combination of both fixed and programmable processing circuitry. Accordingly, the terms "processing circuitry," "processor" or "controller," as used herein, may refer to any one or more of the foregoing structures or any other structure operable to perform techniques described herein.

Examples of a memory unit operatively coupled to the processing circuitry of system 200 may include any type of computer-readable storage media. Some examples may include random access memory (RAM), read only memory (ROM), programmable read only memory (PROM), erasable programmable read only memory (EPROM), one-time programable (OTP) memory, electronically erasable programmable read only memory (EEPROM), flash memory, or another type of volatile or non-volatile memory device. In some examples the computer readable storage media may store instructions that cause the processing circuitry to execute the functions described herein. In some examples, the computer readable storage media may store data, such as configuration information, temporary values and other types of data used to perform the functions of this disclosure.

Radar signal processing unit 222 may be configured to receive a signal from receiver 216 and to process the signal. Some examples of signal processing can include filtering, thresholding, forming radar images, identification and tracking of targets, or the like. Radar signal processing unit 222 may be configured to output raw radar data, radar detection signals, tracks, or any other radar output data.

Radar configuration controller 224 may send control signals to transmitter 214, receiver 216, or both, to control the scanning pattern and waveform configuration, as described above in relation to FIGS. 1A - 1D. Processing circuitry 220 may also host other functional blocks (not depicted in FIG. 2) which may be used to ensure overall radar functionality. In some examples radar sensor 210 may be configured to operate in one or more different frequency bands (e.g., C, X, K, Ku, Ka). In some examples, radar sensor 210 may be implemented as a frequency modulated continuous wave (FMCW) radar. In other examples, radar sensor 210 may be implemented as a pulse-Doppler radar. As described above in relation to FIGS. 1A- 1D, radar sensor 210 may provide Doppler velocity estimation for an airborne vehicle. In some examples, radar sensor 210 may be implemented as a mechanically scanning radar or an electronically scanning radar, or some combination of mechanical and electronic scanning.

In some examples, application module 230 may be hosted on radar sensor 210, such as executed by processing circuitry 220. In other examples, application module 230 may be hosted on an external computing platform, e.g., computing device 232, onboard the vehicle. In other examples, application module 230 may be distributed to both radar sensor 210 and the external computing device 232. Application module 230 may include one or more applications including a radar altimeter application, a terrain aided navigation application, a Doppler navigation application e.g., configured to calculate vehicle velocity based on the operational scenario as described above, as well as other similar applications.

During operation, the circuitry of transmitter 214 sends a radio frequency (RF) signal to antenna 212 for transmission of the radar beams toward the ground. Antenna 212 receives a reflected signal from the ground that is sent to the circuitry of receiver 216. The received reflected signal is sent to radar signal processing unit 222 for generating radar data.

In some examples, application module 230 may perform the Doppler navigation calculations to determine the velocity of the vehicle, based on the three-beam or four-beam configurations described above in relation to FIGS. 1A - 1D. In some examples, application module 230 may also determine the performance target for the velocity estimation based on the operational scenario of the aircraft. Application module 230 may also determine the scan pattern, e.g., angles of the radar beams relative to the aircraft as well as the waveform configuration based on the performance target for the velocity estimation. Application module 230 may send command signals to radar configuration controller 224 to dynamically adjust the scan pattern and waveform configuration according to the command signals from application module 230.

In other examples, application module 230 may perform the Doppler navigation functions to determine the velocity estimate for the aircraft based on the current radar configuration (scan pattern and waveform configuration). In some examples, radar configuration controller 224 may determine the performance target based on the operational scenario, then directly control the radar configuration. In other examples, the functions of determining the performance target then dynamically adjusting the radar configuration may be shared between application module 230 and radar configuration controller 224.

In some examples, either, or both, of radar configuration controller 224 and/or application module 230 may determine the operational scenario, such as the phase of flight, based on data from vehicle velocity, attitude and radar lever arms module 250 (called vehicle module 250 for short). Radar lever arms is related to radar mechanical installation (radar tilt and position with respect to vehicle reference frame/coordination system). This information is used to specify beam directions (angles 102 and 104) and transform data measured by radar into vehicle reference frame/coordination system. In some examples, vehicle module 250 may receive aircraft status information, concentrate information about radar installation (lever arms) and report all data to either or both of application module 230 and/or radar configuration controller 224. In other examples, vehicle module 250 may report status information to either or both of application module 230 and/or radar configuration controller 224, which uses the status information to determine the operational scenario. Examples of status information used to determine the operational scenario may include information from other aircraft systems, such as the flight management system (FMS), air management system (AMS), and similar systems. In some examples, status information may include throttle position, climb or descent rate, airspeed, which is not necessarily the same as the aircraft speed over ground, attitude, altitude, and other status information. For example, a straight and level attitude, a relatively high altitude, and medium throttle position may indicate that the phase of flight is normal cruise. Similarly, a throttle in a low power setting, a descent rate and nose down attitude may indicate an approach to landing for the phase of flight.

In some examples, system 200 may output a signal to a data recipient/consumer 260. Examples of a data recipient or consumer of information may include other aircraft computing systems, in the example of a UAV, data transferred to ground based computing systems. Other examples may also include a display, such as a multi-function display (MFD), an indicator, e.g., an audible or visible indicator, or other consumer of information.

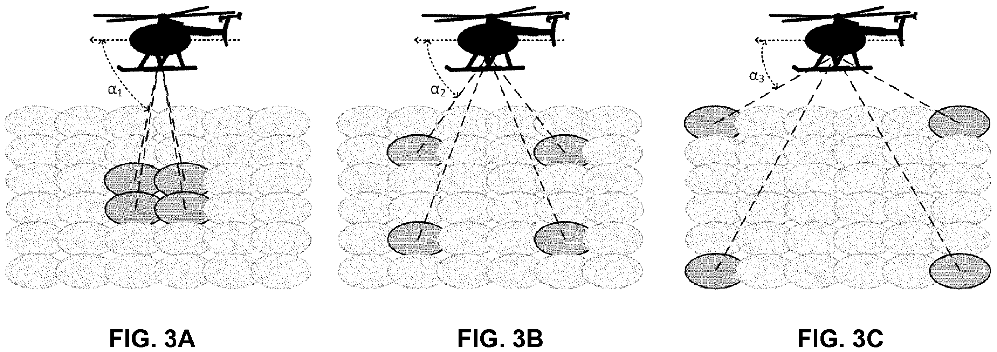

FIGS. 3A, 3B, 3C are conceptual drawings illustrating an example of dynamically adjusting the scan pattern of the radar beams according to one or more techniques of this disclosure. As described above in relation to FIGS. 1A - 2, dynamically adjusting the radar configuration includes adjusting the relative angle of one of the three or more radar beams relative to the vehicle, which is a helicopter in the example of FIGS. 3A - 3C. FIGS. 3A - 3C depict three different radar beam angles relative to the direction of travel of the aircraft, e.g., $\alpha 1$, $\alpha 2$, and $\alpha 3$. The angle, $\alpha 1$, in FIG. 3A may deliver more accurate vertical ascent and descent velocity when compared to FIG. 3C. However, angle α3, of FIG. 3C may deliver more accurate velocity estimates in the horizontal direction of travel for the aircraft.

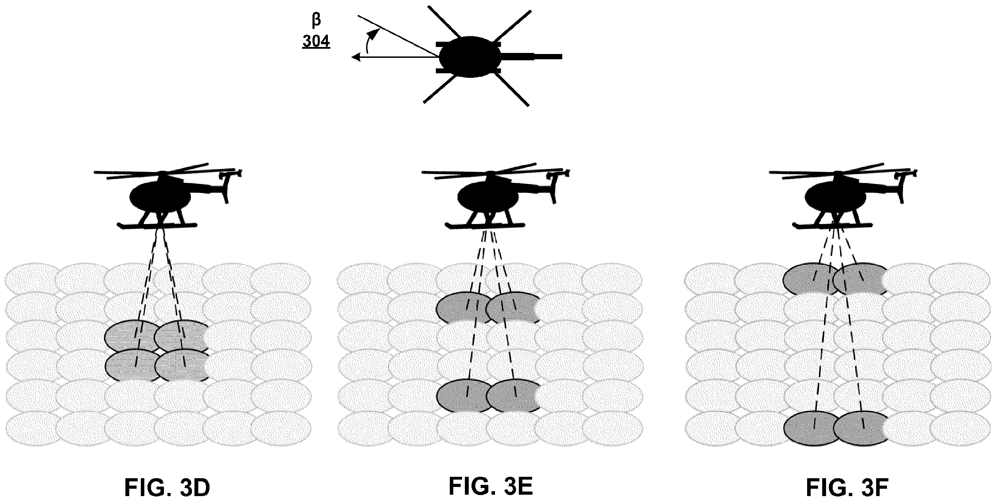

FIGS. 3D, 3E, and 3F are conceptual drawings illustrating an example of dynamically adjusting the scan pattern of the radar beams according to one or more techniques of this disclosure. Similar to FIGS. 3A - 3C, FIGS. 3D - 3F depict three different radar beam angles, β 304 relative to the aircraft direction of travel, but in the horizontal direction, as described above for β 104 in relation to FIGS. 1B and 1D. Similar to FIGS. 3A - 3C above, the example of FIG. 3F may result in more accurate lateral velocity estimate, e.g., perpendicular to a forward direction of travel, when compared to the example of FIG. 3D. The scan configuration of FIG. 3F may be valuable in the example in which the helicopter is flying in a cross wind and may help determine an accurate ground track and speed over ground.

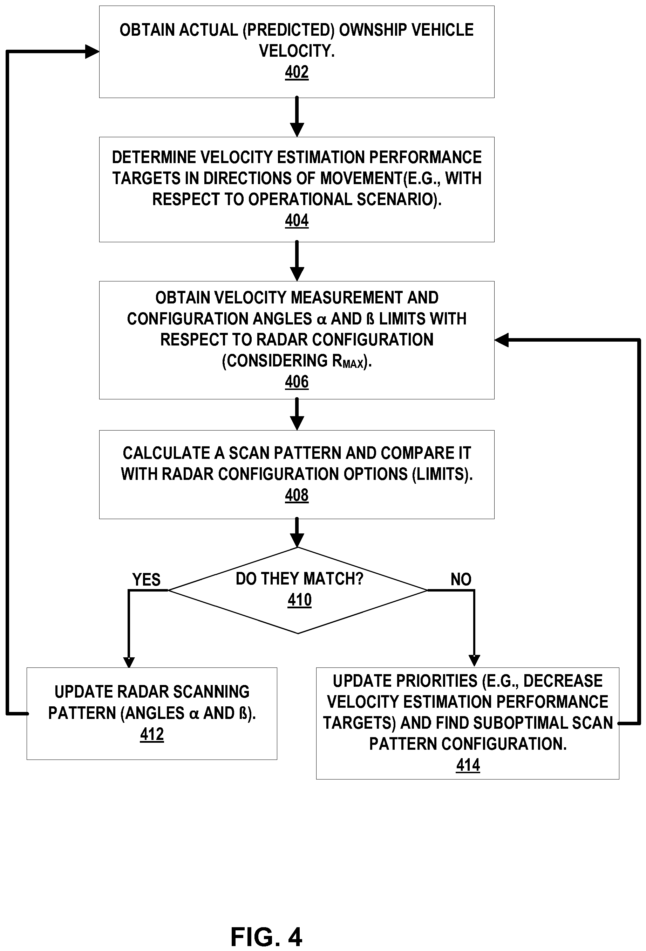

FIG. 4 is a flow chart illustrating an example operation of the radar system executing dynamic scan pattern adjustment according to one or more techniques of this disclosure. As shown in the example of FIG. 4, comparing the radar system limitations, current radar configuration and operational scenario may be an ongoing process throughout the flight. As described above in relation to FIGS. 1A - 3F, the system of this disclosure may dynamically adjust the sensor configuration, e.g., the scan pattern and waveform configuration based on the operational scenario. The example of FIG. 4 will focus on the scan pattern adjustment.

The processing circuitry for the sensor system, e.g., radar system 200 described above in relation to FIG. 2, may optimize the scan pattern to address the real velocities (e.g., front, side, vertical) of the vehicle, considering waveform capability/limits (e.g., maximum unambiguous velocity $V_{max}$) and the velocity target accuracy ($\Delta V$) in directions of movement. For the scan pattern portion of the dynamic sensor adjustment, an objective may include to optimize scan geometry (e.g., scan angles α and β described above in relation to FIGS. 1A - 1D) to achieve the highest measured velocity accuracy with respect to radar configuration, radar performance options, and radar limits, actual ownship velocities (in any 3D direction), and altitude. For example, to measure a fast front velocity (e.g., close to or above maximum unambiguous velocity $V_{max}$) the sensor system may use a higher α, as shown in FIG. 3C, but with limited or degraded estimation accuracy.

The programming instructions for the processing circuitry of the sensor system may consider any of several factors and tradeoffs. Related equations are listed in the table below. Equations are valid for triangular waveform and might differ for other waveforms. In some examples, there is a tradeoff between the maximum sensor range $R_{max}$ (see equation (1.1)) versus maximum unambiguous velocity $V_{max}$ (depends on chirp duration, see equation (1.2)) and range resolution $\Delta R$ (see equation (1.3)). Both $R_{max}$ and $\Delta R$ may depend on radar bandwidth B. Another tradeoff includes velocity resolution $\Delta V$ (see equation (1.4)) versus update rate ($T_{dwell}$; depends on chirp duration $T$ and chirp number per dwell N, see equation (1.5)).

In some examples, the programming instructions may cause the processing circuitry, e.g., 220 of FIG. 2, to perform the processing steps described in the example of FIG. 4. The processing circuitry may obtain an actual velocity vector of ownship vehicle (402). In some examples the velocity vector may come from a previous calculation cycle of FIG. 4. In other examples, the processing circuitry may obtain the 3D velocity vector from other aircraft systems.

As described above in relation to FIGS. 1A - 2, the processing circuitry may determine velocity accuracy requirements in directions of movement, e.g., the target accuracy based at least in part on the operational scenario (404). The processing circuitry may obtain velocity measurement limits with respect to radar configuration and radar system capabilities (406), e.g., considering $R_{max}$. Each radar system may have different radar transmit power, maximum range, receiver sensitivity, signal processing capability, resolution, and other capabilities.

The processing circuitry may calculate a scan pattern to best estimate the ownship velocity based on the operational scenario, then compare the desired scan pattern with the radar configuration limits (408). That is, the processing circuitry may determine angles α and β with respect to an actual velocity vector of ownship and waveform capability ($V_{max}$) to focus on velocity resolution target in directions of movement.

If the desired scan pattern matches the radar limits (YES branch of 410) the processing circuitry may cause the radar configuration controller, e.g., as described for FIG. 2, to update the scan pattern, e.g., the radar beam angles 412. In the example in which the desired scan pattern and the radar system limits do not match (NO branch of 410), the programming instructions may cause the processing circuitry to update the priorities, and in some examples find a sub-optimal scan pattern configuration that is within the radar system limits (414). In some examples the processing circuitry may decrease the velocity target accuracy as needed.

Table 1 - Radar Equations

$$R_{max} = f_s \cdot \frac{c \cdot T}{2 \cdot B} \qquad (1.1)$$

$$V_{max} = \frac{\lambda}{4 \cdot T} \qquad (1.2)$$

8

(continued)

$$\Delta R = \frac{c}{2 \cdot B} \qquad (1.3)$$

$$\Delta V = \frac{\lambda}{2 \cdot N \cdot T} \qquad (1.4)$$

$$T_{dwell} = N \cdot T \qquad (1.5)$$

In the radar equation table above:
Waveform and radar parameters:

- $T$ — Chirp duration
- $N$ — Number of chirps per dwell
- $B$ — Radar bandwidth
- $f_s$ — Sampling frequency

- $f_c$ — Carrier frequency
- $c$ — Speed of light or speed of light propagation in given medium
- $\lambda$ — Wavelength

Radar parameters:

- $R_{max}$ — Maximum detection range
- $\Delta R$ — Range resolution
- $V_{max}$ — Maximum unambiguous velocity
- $\Delta V$ — Velocity resolution
- $T_{dwell}$ — Time that the antenna beam spends in a certain direction

All above listed radar parameters ($R_{max}$, $\Delta R$, $V_{max}$, $\Delta V$ and $T_{dwell}$) together form the performance target for velocity estimation.

FIG. 4 is a flow chart illustrating an example operation of the radar system executing dynamic scan pattern adjustment according to one or more techniques of this disclosure using performance target as a decision criterion. In other examples, other criteria might be used instead of or together with the performance target, the other criteria comprising one or more of: maximum range, maximum unambiguous velocity, minimum update rate.

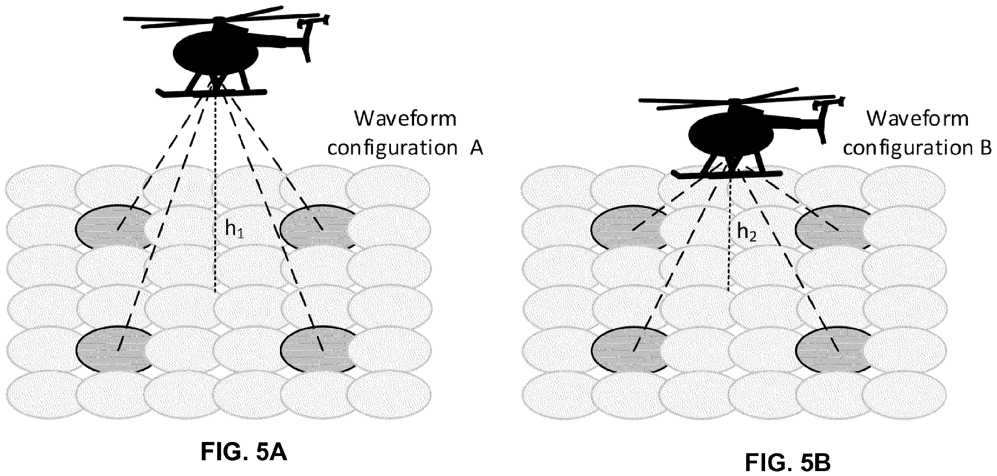

FIGS. 5A and 5B are conceptual drawings illustrating different operational scenarios resulting in dynamic changes to the waveform configuration for the system of this disclosure. Similar to the updates described in relation to FIG. 4, overall radar performance may be optimized by smart waveform selection, e.g., adjustment to waveform characteristics as described above in relation to FIGS. 1A - 3F. For example, chirp duration T might be reduced for low altitude flights to increase output data rate or to improve velocity resolution $\Delta V$. Increasing the number of chirps N and keeping the same update rate may improve velocity resolution, $\Delta V$, to meet target accuracy based on the operational scenario.

In some examples, an objective of the sensor system of this disclosure may include to optimize the radar waveform to achieve the highest accuracy of the estimated velocity with respect to actual ownship velocity, altitude, radar configuration, performance options and limits, as described above in relation to FIG. 4. For example, shorter chirp used at lower altitudes might be used to decrease scan time or to increase number of chirps N to increase $\Delta V$. In other words, chirp duration T may be decreased (also decreasing $R_{max}$) for low altitude flights to either decrease $T_{dwell}$ (improve scan rate) or to increase the number of chirps N to increase velocity resolution $\Delta V$. In other examples, radar bandwidth B might be decreased (resulting in an increase of $R_{max}$ and $\Delta R$ is worsened) for high altitude flights to achieve a desired radar range that avoids worsening $V_{max}$ and $\Delta V$ (by increasing of $T$ instead of $B$).

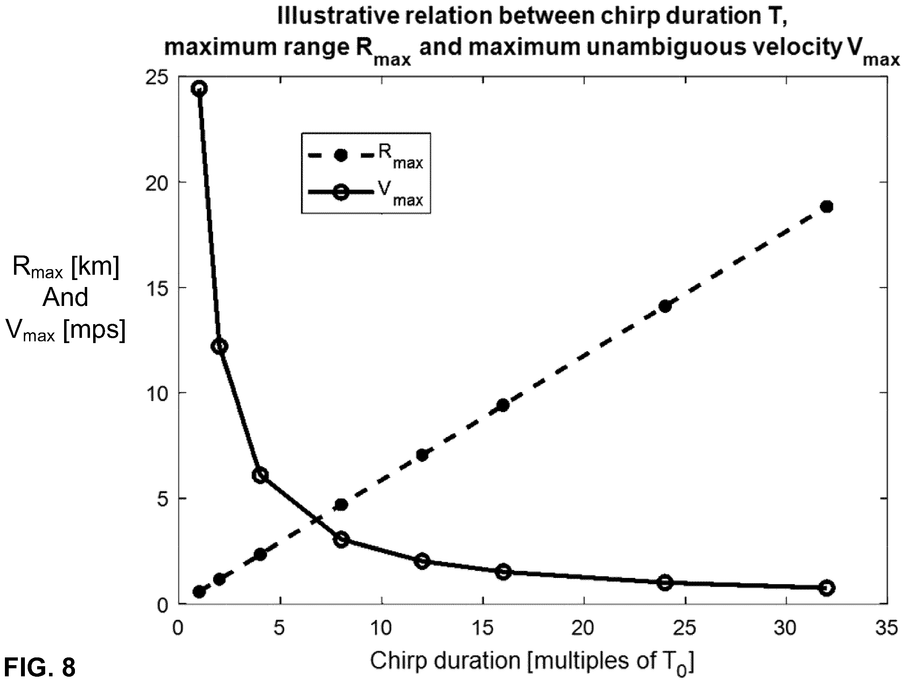

The programming instructions for the processing circuitry may consider several different factors, including the radar maximum range $R_{max}$ (see equation (1.1)) versus maximum velocity $V_{max}$ (depends on chirp duration, see FIG. 8 and equation (1.2)) and range resolution $\Delta R$ (see equation (1.3)). Both $R_{max}$ and $\Delta R$ may depend on radar bandwidth B. Other tradeoffs may include velocity resolution $\Delta V$ (see equation (1.4)) versus update rate $T_{dwell}$. $T_{dwell}$ may depend on chirp duration *T* and chirp number per dwell A, see equation (1.5).

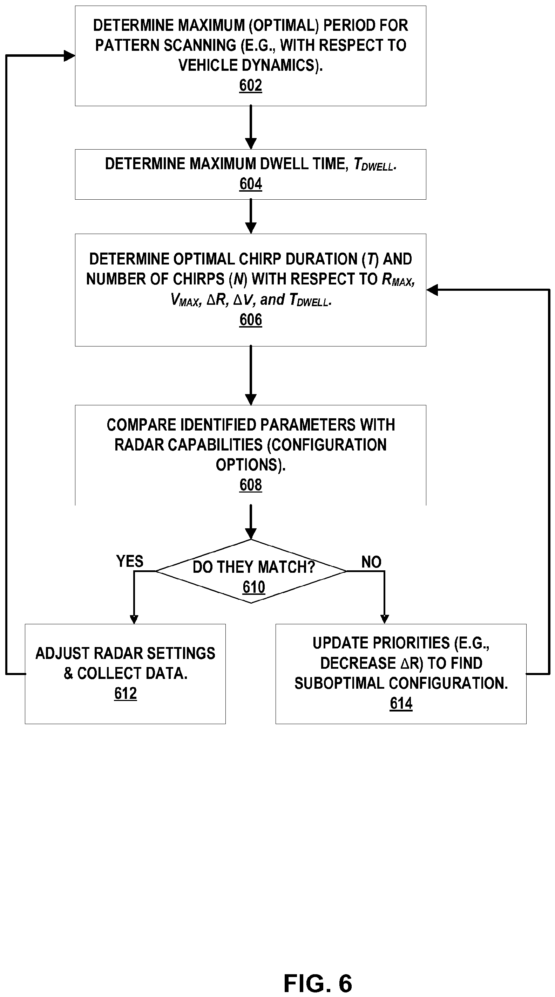

FIG. 6 is a flow chart illustrating an example operation of the radar system executing dynamic waveform configuration adjustment according to one or more techniques of this disclosure. As with the example of FIG. 4, comparing the radar system limitations, current radar configuration and operational scenario may be an ongoing process throughout the flight. The example of FIG. 6 will focus on the waveform configuration adjustment.

The processing circuitry for the sensor system, e.g., radar system 200 described above in relation to FIG. 2, may optimize the waveform configuration based on the operational scenario. The processing circuitry may determine maximum (optimal) period for pattern scanning (e.g., with respect to vehicle dynamics) (602). The vehicle dynamics (e.g., acceleration, maximum speed) may differ for different vehicle types (e.g., helicopter, UAV, manned fixed wing aircraft and similar vehicles). The processing circuitry may also determine a maximum (optimal) time period for beam direction and dwell duration $T_{dwell}$ (604). The processing circuitry may further determine the chirp duration, *T*, and number of chirps, N, to reflect $V_{max}$. The programming instructions for the processing circuitry may also include a determination based on any one or more of $V_{max}$, $R_{max}$, $\Delta V$, $\Delta R$, and $T_{dwell}$ (606).

Similar to the example of FIG. 4 above, the processing circuitry may compare the desired parameters, e.g., frequency, power, chirp duration, to the capabilities of the radar system (608). If the radar system can be configured for the desired parameters, (YES branch of 610) the processing circuitry may signal the radar configuration control, e.g., radar configuration controller 224 of FIG. 2, to adjust the radar configuration and collect data for the velocity estimation based on the updated waveform configuration (612). If the radar system is unable be configured for the desired parameters, (NO branch of 610) the processing circuitry may update the priorities to achieve the target accuracy, such as decrease the range resolution, $\Delta R$, to find a suboptimal configuration (614) and recalculate the desired parameters (606).

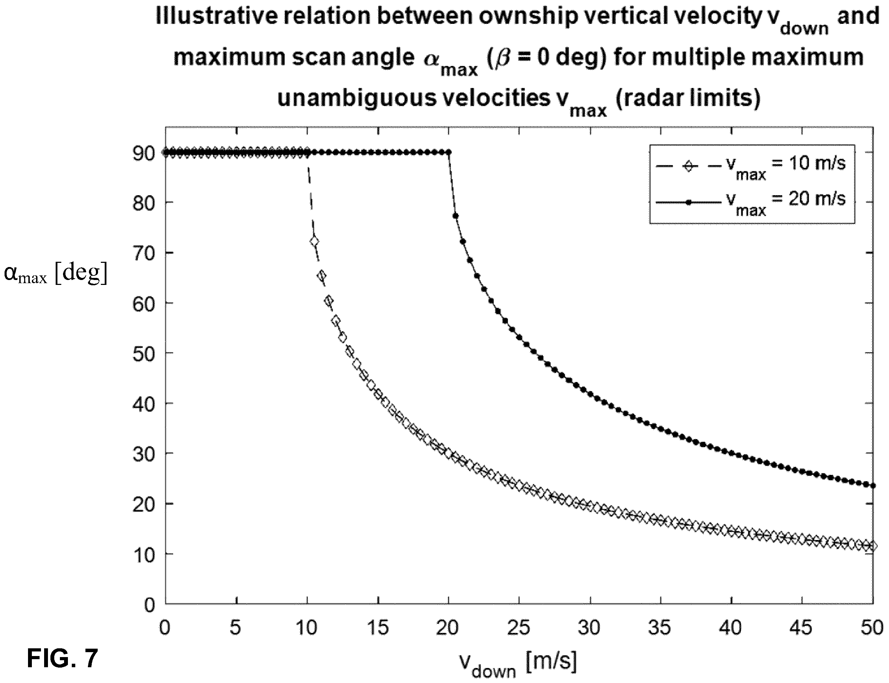

FIG. 7 is a simplified graph illustrating a relationship between ownship vertical velocity and maximum scan angle alpha. The example of FIG. 7 illustrates radar theory related to Doppler navigation calculations, e.g., estimating vehicle velocity based on the three-beam or four-beam configuration described above in relation to FIGS. 1A - 1D. Doppler shift $f_d$ measured in each beam is given by equation 2.1 below.

$$f_d = -\frac{2 \cdot v}{\lambda} \cdot \cos g \qquad\qquad 2.1$$

In equation 2.1:

- *v*    Platform/ownship velocity
- $\lambda$    Wavelength
- *g*    Angle between velocity vector and direction of radar beam.

The angle g is a function of depression angle $\alpha$, azimuth angle beta $\beta$, and other variables, for example but not limited to angle between vehicle heading and vehicle motion.

An illustrative example of relation between ownship vertical velocity and maximum scan angle alpha (for simple beam configuration where $\alpha$ = g), considering radar maximum unambiguous velocity limits, is depicted in FIG. 7. For $v_{down}$ < $v_{max}$, the optimal is $\alpha$ = 90 degrees (beam perpendicular to the ground). Decreasing the $\alpha$ angle (steering the beam from perpendicular to the ground) changes the geometry and ensures that projection of vertical velocity $v_{down}$ into beam direction will be below $v_{max}$. On the other hand, decreasing the $\alpha$ angle would also increase the measurement error and its projection to vertical direction due the geometry.

FIG. 8 is a graph illustrating a relationship between chirp duration, maximum range, and maximum unambiguous velocity. Similar to the example of FIG. 7, FIG. 8 shows how changes in waveform configuration impacts the velocity measurement.

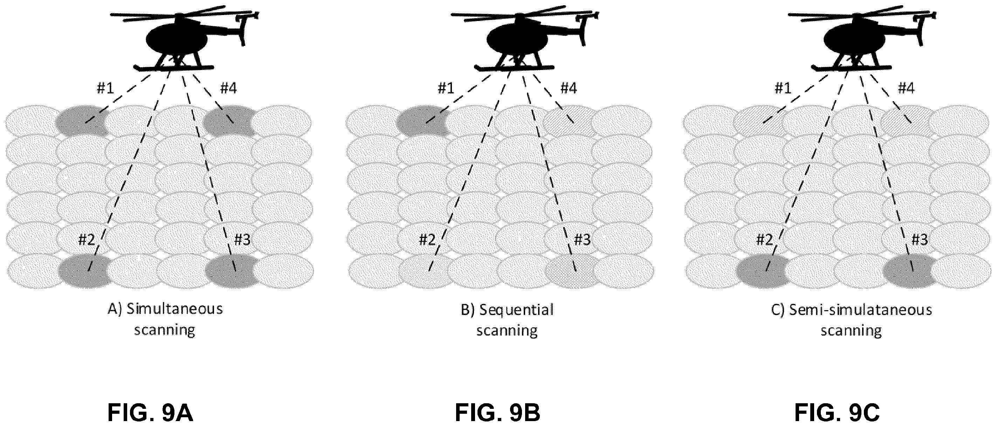

FIGS. 9A, 9B, and 9C are conceptual diagrams illustrating examples of simultaneous and sequential scanning. The presented invention is related to Doppler velocity estimation using radar with steered (electronically, mechanically or combination of both) radar beam(s). As described above in relation to FIG. 1, the beam steering might be implemented via different scanning mechanisms.

For the system of the disclosure, a "radar receive beam" is radar energy transmitted by one of the transmit beams, reflected from an object, and received by the antenna of the radar system. The reflected signal may be filtered, amplified, as well as passed through circuitry that performs other signal processing, as described above in relation to FIG. 2, for example. The data measured by individual radar receive beams (e.g., two or more beams) might be obtained and measured in parallel (at the same time), sequentially (one by one), or semi-sequentially (one set of beams after another set of beams).

FIG. 9A shows an illustrative example of an in parallel or simultaneous scanning mode, in which data from all beams (#1-#4) are measured at the same time. FIG. 9B depicts a sequential scanning mode, in which data from one beam only is measured in one time instance, e.g., beam #1 in $T_{dwell\#1}$, as shown in FIG. 9B. Another receive beam, e.g., beam #2 may be active in the following time instance (e.g., $T_{dwell\#2}$). The example of FIG. 9C, shows a semi-sequential scanning mode, in which data from several beams, e.g., beams #2 and #3, are measured in one time instance (e.g., $T_{dwell\#1}$) and data from other beams, e.g., beams #1 and #4 in the following time instance (e.g., $T_{dwell\#2}$).

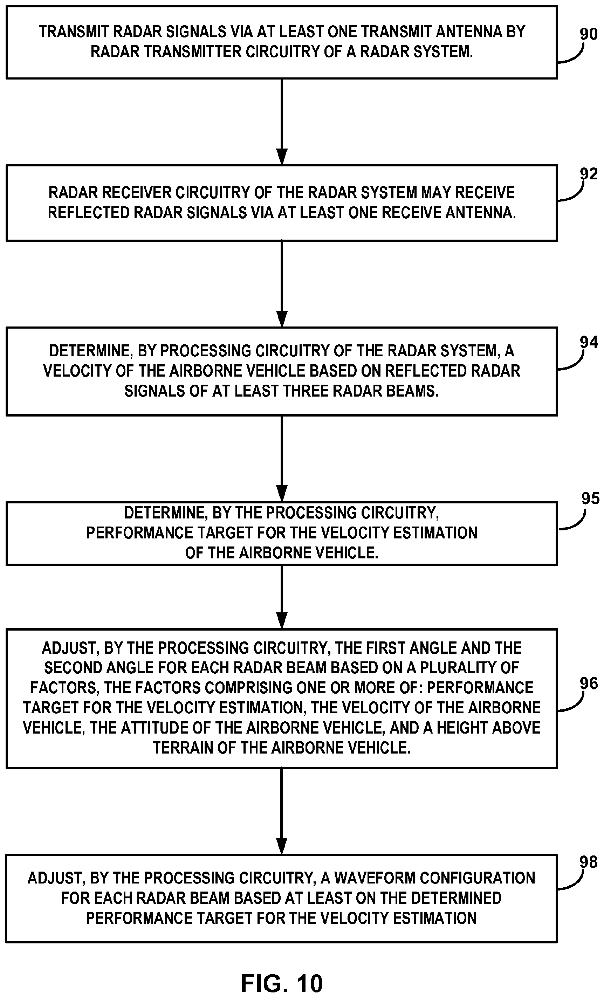

FIG. 10 is a flow chart illustrating an example mode of operation for the system of this disclosure. The blocks of FIG. 10 will be described in terms of FIG. 2, unless otherwise indicated.

The radar system of this disclosure may include radar transmitter circuitry 214 to transmit radar signals, e.g., beams #1, #2 and #3 of FIG. 1B, via at least one transmit antenna 212 by radar system 200 (90). In some examples radar system 200 is configured to be installed in an airborne vehicle. Similarly, radar receiver circuitry 216 of radar system 200 may receive reflected radar signals, e.g., as shown in FIGS. 3A - 3F, via at least one receive antenna 212 (92).

Processing circuitry of the radar system, e.g., processing circuitry 220, may determine a velocity of the airborne vehicle based on reflected radar signals of at least three radar beams (94). Each radar beam has a pointing direction defined at least in part by a first angle and a second angle relative to the airborne vehicle as shown in FIGS. 1A - 1D and 3A - 3F.

The processing circuitry may determine a performance target for the velocity estimation of the airborne vehicle (95) as described above in relation to FIGS. 1A - 6. The velocity target may depend, at least in part, on the operational scenario for the vehicle, such as the phase of flight.

In some examples, the processing circuitry may adjust the first angle and the second angle for each radar beam based also on a plurality of factors, the factors comprising one or more of: the performance target, the velocity and attitude of the airborne vehicle and a height above terrain of the airborne vehicle (96). In some examples, the processing circuitry, may also adjust a waveform configuration for each radar beam based at least on the determined performance target for the velocity estimation (98). When the beam angles and/or the waveform have been adjusted, the processing circuitry may switch to the step 90 and start the process shown in FIG. 10 again.

The techniques of this disclosure may also be described in the following examples.

Example 1. A system configured to be installed in an vehicle, the system comprising: radar transmitter circuitry configured to output radar signals via at least one transmit antenna; radar receiver circuitry configured to receive reflected radar signals via at least one receive antenna; processing circuitry configured to: determine a velocity of the vehicle based on reflected and received radar signals of at least three radar beams, wherein each radar beam has a pointing direction defined at least in part by a first angle and a second angle relative to the vehicle; determine a performance target for the velocity estimation of the vehicle; adjust the first angle and the second angle for each radar beam based on a plurality of factors, the factors comprising one or more of: the performance target, the velocity and attitude of the vehicle and a height above terrain of the vehicle.

Example 2. The system of example 1, wherein the processing circuitry is further configured to update a waveform configuration for each radar beam based at least on the determined performance target for the velocity estimation.

Example 3. The system of examples 1 or 2, wherein the waveform configuration comprises the processing circuitry controlling the radar transmitter circuitry to adjust output signal characteristics comprising one or more of: frequency, chirp type and characteristics, radar beam direction and/or beamwidth, and dwell parameters.

Example 4. The system of any of examples 1-3, wherein the processing circuitry is configured to determine the performance target for the velocity estimation according to a specific waveform configuration; including the triangular waveform:

$$\Delta V = \frac{\lambda}{2 \cdot N \cdot T}$$

where: $N$ = a number of chirps per dwell; $T$ = chirp duration; and Å = signal wavelength.

Example 5. The system of any of examples 1-4, wherein the vehicle is an airborne vehicle, wherein the performance target for the velocity estimation is based on an operational scenario for the airborne vehicle, and wherein the operational scenario comprises a phase of flight, a location of the airborne vehicle relative to terrain, and status of other navigation systems available to the airborne vehicle.

Example 6. The system of any of examples 1-5, wherein the processing circuitry is configured to adjust a radar configuration based on the plurality of factors, where to adjust the radar configuration comprises to adjust the first angle and the second angle of each radar beam.

Example 7. The system of any of examples 1-6, wherein the processing circuitry is further configured to: calculate a desired radar configuration based on the plurality of factors; compare the desired radar configuration to a configuration capability of the system; in response to determining that the system is unable to be adjusted to the desired radar configuration, update priorities for the performance target; and recalculate the desired radar configuration based on the updated priorities.

Example 8. The system of any of examples 1-7, wherein to calculate the desired configuration, the processing circuitry is configured to calculate a desired first angle and a desired second angle for each radar beam based on the plurality of factors, and wherein the processing circuitry is further configured to compare the desired first angle and second angle for each radar beam to a radar beam angle capability for the system.

Example 9. The system of example 7, wherein to calculate the desired configuration, the processing circuitry is configured to calculate a desired waveform configuration for each radar beam, and wherein the processing circuitry is further configured to compare the desired waveform configuration to a waveform capability of the system.

Example 10. A method comprising: transmitting radar signals via at least one transmit antenna by radar transmitter circuitry of a radar system, wherein the radar system is configured to be installed in an vehicle; receiving reflected radar signals via at least one receive antenna by radar receiver circuitry of the radar system; determining, by processing circuitry of the radar system, a velocity of the vehicle based on reflected radar signals of at least three radar beams, wherein each radar beam has a pointing direction defined at least in part by a first angle and a second angle relative to the vehicle; determining, by the processing circuitry, a performance target for the velocity estimation of the vehicle; adjusting, by the processing circuitry, the first angle and the second angle for each radar beam based on a plurality of factors, the factors comprising one or more of: the performance target, the velocity and attitude of the vehicle and a height above terrain of the vehicle.

Example 11. The method of example 10, further comprising updating, by the processing circuitry, a waveform configuration for each radar beam based at least on the determined performance target for the velocity estimation.

Example 12. The method of example 11, wherein the waveform configuration comprises the processing circuitry controlling the radar transmitter circuitry to adjust output signal characteristics comprising one or more of: frequency, chirp type and characteristics, radar beam direction and/or beamwidth, and dwell parameters.

Example 13. The method of example 10, wherein the vehicle is an airborne vehicle, wherein the performance target for the velocity estimation is based on an operational scenario for the airborne vehicle, and wherein the operational scenario comprises a phase of flight, a location of the airborne vehicle relative to terrain, and status of other navigation systems available to the airborne vehicle.

Example 14. The method of example 10, further comprising adjusting, by the processing circuitry, a radar configuration based on the plurality of factors, wherein adjusting the radar configuration comprises adjusting the first angle and the second angle of each radar beam.

Example 15. The method of example 14, the method further comprising: calculating, by the processing circuitry, a desired radar configuration based on the plurality of factors; comparing by the processing circuitry, the desired radar configuration to a configuration capability of the system; in response to determining that the system is unable to be adjusted to the desired radar configuration, updating, by the processing circuitry, priorities for the performance target; and recalculating, by the processing circuitry, the desired radar configuration based on the updated priorities.

Example 16. The method of example 15, wherein calculating the desired radar configuration comprises calculating a desired first angle and a desired second angle for each radar beam based on the plurality of factors, and the method further comprising, comparing, by the processing circuitry, the desired first angle and second angle for each radar beam to a radar beam angle capability for the system.

Example 17. The method of example 15, wherein calculating the desired radar configuration comprises calculating a desired waveform configuration for each radar beam, and the method further comprising, comparing, by the processing circuitry, the desired waveform configuration to a waveform capability of the system.

Example 18. A non-transitory computer-readable storage medium comprising instructions that, when executed, cause processing circuitry of a computing device to: control radar transmitter circuitry of a radar system to transmit radar signals via at least one transmit antenna, wherein the radar system is configured to be installed in an vehicle; control radar receiver circuitry of the radar system to receive reflected radar signals via at least one receive antenna; determine a velocity of the vehicle based on reflected radar signals of at least three radar beams, wherein each radar beam has a pointing direction defined at least in part by a first angle and a second angle relative to the vehicle; determine a performance target for the velocity estimation of the vehicle; adjust the first angle and the second angle for each radar beam based on a plurality of factors, the factors comprising one or more of: the performance target, the velocity and attitude of the vehicle and a height above terrain of the vehicle.

Example 19. The non-transitory computer-readable storage medium of example 18, further comprising instructions for causing the processing circuitry to update a waveform configuration for each radar beam based at least on the determined performance target for the velocity estimation.

Example 20. The non-transitory computer-readable storage medium of example 19, wherein the waveform configuration comprises the processing circuitry controlling the radar transmitter circuitry to adjust output signal characteristics comprising one or more of: frequency, chirp type and characteristics, radar beam direction and/or beamwidth, and dwell parameters.

In one or more examples, the functions described above may be implemented in hardware, software, firmware, or any combination thereof. For example, the various components of FIG. 2, such as signal processing 222, radar configuration controller 224 and processing circuitry 220 may be implemented in hardware, software, firmware, or any combination thereof. If implemented in software, the functions may be stored on or transmitted over, as one or more instructions or code, a computer-readable medium and executed by a hardware-based processing unit. Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

The term "non-transitory" may indicate that the storage medium is not embodied in a carrier wave or a propagated signal. In certain examples, a non-transitory storage medium may store data that can, over time, change (e.g., in RAM or cache). By way of example, and not limitation, such computer-readable storage media, may include random access memory (RAM), read only memory (ROM), programmable read only memory (PROM), erasable programmable read only memory (EPROM), electronically erasable programmable read only memory (EEPROM), flash memory, a hard disk, a compact disc ROM (CD-ROM), a floppy disk, a cassette, magnetic media, optical media, or other computer readable media. In some examples, an article of manufacture may include one or more computer-readable storage media.

Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transient media, but are instead directed to non-transient, tangible storage media. Combinations of the above should also be included within the scope of computer-readable media.

Instructions may be executed by one or more processors, such as one or more DSPs, general purpose microprocessors, ASICs, FPGAs, or other equivalent integrated or discrete logic circuitry. Accordingly, the term "processor" and "processing circuitry," as used herein, such as ECS controller 202, may refer to any of the foregoing structure or any other structure suitable for implementation of the techniques described herein. Also, the techniques could be fully implemented in one or more circuits or logic elements.

The techniques of this disclosure may be implemented in a wide variety of devices or apparatuses, including, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a hardware unit or provided by a collection of interoperative hardware units, including one or more processors as described above, in conjunction with suitable software and/or firmware.

Various examples of the disclosure have been described. These and other examples are within the scope of the following claims.

**Claims**

1.  A system configured to be installed in a vehicle, the system comprising:

    radar transmitter circuitry configured to output radar signals via at least one transmit antenna;
    radar receiver circuitry configured to receive reflected radar signals via at least one receive antenna;
    processing circuitry configured to:

    determine a velocity of the vehicle based on reflected radar signals of at least three radar beams, wherein each radar beam has a pointing direction defined at least in part by a first angle and a second angle relative to the vehicle;
    determine a performance target for the velocity estimation of the vehicle;
    adjust the first angle and the second angle for each radar beam based on a plurality of factors, the factors comprising one or more of: the performance target, the velocity and attitude of the vehicle and a height above terrain and attitude of the vehicle.

2.  The system of claim 1, wherein the processing circuitry is further configured to update a waveform configuration for each radar beam based at least on the determined performance target for the velocity estimation.

3. The system of claim 2, wherein the waveform configuration comprises the processing circuitry controlling the radar transmitter circuitry to adjust output signal characteristics comprising one or more of: frequency, chirp type and characteristics, radar beam direction and/or beamwidth, and dwell parameters.

4. The system of any of claims 1-3, wherein the processing circuitry is configured to determine the performance target for the velocity estimation based at least in part on the waveform configuration.

5. The system of any of claims 1-4,

   wherein the vehicle is an airborne vehicle,
   wherein the performance target for the velocity estimation is based on an operational scenario for the airborne vehicle, and
   wherein the operational scenario comprises a phase of flight, a location of the airborne vehicle relative to terrain, and status of other navigation systems available to the airborne vehicle.

6. The system of any of claims 1-5,

   wherein the processing circuitry is configured to adjust a radar configuration based on the plurality of factors,
   where to adjust the radar configuration comprises to adjust the first angle and the second angle of each radar beam.

7. The system of claim 6, wherein the processing circuitry is further configured to:

   calculate a desired radar configuration based on the plurality of factors;
   compare the desired radar configuration to a configuration capability of the system;
   in response to determining that the system is unable to be adjusted to the desired radar configuration, update priorities for the performance target; and
   recalculate the desired radar configuration based on the updated priorities.

8. The system of any of claims 1-7,

   wherein to calculate the desired configuration, the processing circuitry is configured to calculate a desired first angle and a desired second angle for each radar beam based on the plurality of factors, and
   wherein the processing circuitry is further configured to compare the desired first angle and second angle for each radar beam to a radar beam angle capability of the system.

9. The system of claim 7,

   wherein to calculate the desired configuration, the processing circuitry is configured to calculate a desired waveform configuration for each radar beam, and
   wherein the processing circuitry is further configured to compare the desired waveform configuration to a waveform capability of the system.

10. A method comprising:

   transmitting radar signals via at least one transmit antenna by radar transmitter circuitry of a radar system, wherein the radar system is configured to be installed in a vehicle;
   receiving reflected radar signals via at least one receive antenna by radar receiver circuitry of the radar system;
   determining, by processing circuitry of the radar system, a velocity of the vehicle based on reflected radar signals of at least three radar beams, wherein each radar beam has a pointing direction defined at least in part by a first angle and a second angle relative to the vehicle;
   determining, by the processing circuitry, a performance target of the vehicle;
   adjusting, by the processing circuitry, the first angle and the second angle for each radar beam based on a plurality of factors, the factors comprising one or more of: the performance target, the velocity and attitude of the vehicle and a height above terrain of the vehicle.

11. The method claim 10, further comprising updating, by the processing circuitry, a waveform configuration for each radar beam based at least on the determined performance target for the velocity estimation.

12. The method of claim 11, wherein the waveform configuration comprises the processing circuitry controlling the radar transmitter circuitry to adjust output signal characteristics comprising one or more of: frequency, chirp type and characteristics, radar beam direction and/or beamwidth, and dwell parameters.

13. The method of any of claims 10-12:

    wherein the vehicle is an airborne vehicle,
    wherein the performance target for the velocity estimation is based on an operational scenario for the airborne vehicle, and
    wherein the operational scenario comprises a phase of flight, a location of the airborne vehicle relative to terrain, and status of other navigation systems available to the airborne vehicle.

14. The method of any of claims 10-13, further comprising adjusting, by the processing circuitry, a radar configuration based on the plurality of factors, wherein adjusting the radar configuration comprises adjusting the first angle and the second angle of each radar beam.

15. The method of claim 14, the method further comprising:

    calculating, by the processing circuitry, a desired radar configuration based on the plurality of factors;
    comparing, by the processing circuitry, the desired radar configuration to a configuration capability of the system;
    in response to determining that the system is unable to be adjusted to the desired radar configuration, updating, by the processing circuitry, priorities for the performance target; and
    recalculating, by the processing circuitry, the desired radar configuration based on the updated priorities.

FIG. 1B

FIG. 1A

FIG. 1C

FIG. 1D

EP 4 575 572 A1

TRANSMIT BEAM
120

122
124
126
128
129

FIG. 1E

**FIG. 2**

EP 4 575 572 A1

FIG. 3A                    FIG. 3B                    FIG. 3C

EP 4 575 572 A1

FIG. 3F

FIG. 3E

FIG. 3D

β
304

```
OBTAIN ACTUAL (PREDICTED) OWNSHIP VEHICLE
VELOCITY.
402
```

```
DETERMINE VELOCITY ESTIMATION PERFORMANCE
TARGETS IN DIRECTIONS OF MOVEMENT(E.G., WITH
RESPECT TO OPERATIONAL SCENARIO).
404
```

```
OBTAIN VELOCITY MEASUREMENT AND
CONFIGURATION ANGLES α AND ß LIMITS WITH
RESPECT TO RADAR CONFIGURATION
(CONSIDERING R_{MAX}).
406
```

```
CALCULATE A SCAN PATTERN AND COMPARE IT
WITH RADAR CONFIGURATION OPTIONS (LIMITS).
408
```

```
DO THEY MATCH?
410
```

YES          NO

```
UPDATE RADAR SCANNING
PATTERN (ANGLES α AND ß).
412
```

```
UPDATE PRIORITIES (E.G., DECREASE
VELOCITY ESTIMATION PERFORMANCE
TARGETS) AND FIND SUBOPTIMAL SCAN
PATTERN CONFIGURATION.
414
```

## FIG. 4

Waveform configuration A

$h_1$

**FIG. 5A**

Waveform configuration B

$h_2$

**FIG. 5B**

EP 4 575 572 A1

DETERMINE MAXIMUM (OPTIMAL) PERIOD FOR
PATTERN SCANNING (E.G., WITH RESPECT TO
VEHICLE DYNAMICS).
602

DETERMINE MAXIMUM DWELL TIME, $T_{DWELL}$.
604

DETERMINE OPTIMAL CHIRP DURATION ($T$) AND
NUMBER OF CHIRPS ($N$) WITH RESPECT TO $R_{MAX}$,
$V_{MAX}$, $\Delta R$, $\Delta V$, and $T_{DWELL}$.
606

COMPARE IDENTIFIED PARAMETERS WITH
RADAR CAPABILITIES (CONFIGURATION
OPTIONS).
608

DO THEY MATCH?
610

YES

NO

ADJUST RADAR SETTINGS
& COLLECT DATA.
612

UPDATE PRIORITIES (E.G.,
DECREASE $\Delta R$) TO FIND
SUBOPTIMAL CONFIGURATION.
614

FIG. 6

Illustrative relation between ownship vertical velocity $v_{down}$ and maximum scan angle $\alpha_{max}$ ($\beta = 0$ deg) for multiple maximum unambiguous velocities $v_{max}$ (radar limits)

FIG. 7

Illustrative relation between chirp duration T, maximum range $R_{max}$ and maximum unambiguous velocity $V_{max}$

FIG. 8

EP 4 575 572 A1

A) Simultaneous scanning

FIG. 9A

B) Sequential scanning

FIG. 9B

C) Semi-simultaneous scanning

FIG. 9C

```
┌─────────────────────────────────────────────────────────┐
│ TRANSMIT RADAR SIGNALS VIA AT LEAST ONE TRANSMIT ANTENNA BY │  90
│ RADAR TRANSMITTER CIRCUITRY OF A RADAR SYSTEM.          │
└─────────────────────────────────────────────────────────┘
                          │
                          ▼
┌─────────────────────────────────────────────────────────┐
│ RADAR RECEIVER CIRCUITRY OF THE RADAR SYSTEM MAY RECEIVE │  92
│ REFLECTED RADAR SIGNALS VIA AT LEAST ONE RECEIVE ANTENNA. │
└─────────────────────────────────────────────────────────┘
                          │
                          ▼
┌─────────────────────────────────────────────────────────┐
│ DETERMINE, BY PROCESSING CIRCUITRY OF THE RADAR SYSTEM, A │  94
│ VELOCITY OF THE AIRBORNE VEHICLE BASED ON REFLECTED RADAR │
│ SIGNALS OF AT LEAST THREE RADAR BEAMS.                  │
└─────────────────────────────────────────────────────────┘
                          │
                          ▼
┌─────────────────────────────────────────────────────────┐
│ DETERMINE, BY THE PROCESSING CIRCUITRY,                 │  95
│ PERFORMANCE TARGET FOR THE VELOCITY ESTIMATION          │
│ OF THE AIRBORNE VEHICLE.                                │
└─────────────────────────────────────────────────────────┘
                          │
                          ▼
┌─────────────────────────────────────────────────────────┐
│ ADJUST, BY THE PROCESSING CIRCUITRY, THE FIRST ANGLE AND THE │
│ SECOND ANGLE FOR EACH RADAR BEAM BASED ON A PLURALITY OF │
│ FACTORS, THE FACTORS COMPRISING ONE OR MORE OF: PERFORMANCE │  96
│ TARGET FOR THE VELOCITY ESTIMATION, THE VELOCITY OF THE AIRBORNE │
│ VEHICLE, THE ATTITUDE OF THE AIRBORNE VEHICLE, AND A HEIGHT ABOVE │
│ TERRAIN OF THE AIRBORNE VEHICLE.                        │
└─────────────────────────────────────────────────────────┘
                          │
                          ▼
┌─────────────────────────────────────────────────────────┐
│ ADJUST, BY THE PROCESSING CIRCUITRY, A WAVEFORM CONFIGURATION │  98
│ FOR EACH RADAR BEAM BASED AT LEAST ON THE DETERMINED    │
│ PERFORMANCE TARGET FOR THE VELOCITY ESTIMATION         │
└─────────────────────────────────────────────────────────┘
```

**FIG. 10**

Europäisches
Patentamt
European
Patent Office
Office européen
des brevets

# EUROPEAN SEARCH REPORT

**Application Number**

EP 24 21 5558

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 095 496 A (EMI LTD) 29 September 1982 (1982-09-29) | 1,6,8, 10,14 | INV. G01S13/42 |
| Y | * page 1, line 90 - line 103 * | 2-5, | G01S13/58 |
| | * page 2, line 44 - line 61 * | 11-13 | G01S13/60 |
| A | * page 2, line 70 - line 85 * | 7,9,15 | G01S13/91 |
| | * page 3, line 33 - line 50 * | | G01S13/92 |
| | * figures 1-13 * | | G01S13/935 |
| | ----- | | |
| Y | US 3 105 234 A (LURIE WILLIAM B ET AL) 24 September 1963 (1963-09-24) | 2-5, 11-13 | ADD. G01S13/88 |
| A | * column 1, line 45 - line 57 * | 1,6-10, | G01S13/02 |
| | * column 2, line 33 - line 53 * | 14,15 | |
| | * figures 1-3 * | | |
| | ----- | | |
| A | JP H04 106783 U (MITSUBISHI PLATE INDUSTRY CO., LTD.) 14 September 1992 (1992-09-14) * the whole document * | 1-15 | |
| | ----- | | |

**TECHNICAL FIELDS SEARCHED (IPC)**

G01S

The present search report has been drawn up for all claims

| Place of search | Date of completion of the search | Examiner |
|---|---|---|
| Munich | 16 April 2025 | Köppe, Maro |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 21 5558

16-04-2025

| Patent document cited in search report | | Publication date | Patent family member(s) | Publication date |
|---|---|---|---|---|
| GB 2095496 | A | 29-09-1982 | NONE | |
| US 3105234 | A | 24-09-1963 | NONE | |
| JP H04106783 | U | 14-09-1992 | NONE | |

EPO FORM P0459